# EUROPEAN PATENT SPECIFICATION

(11) **EP 3 882 184 B1**
(45) Date of publication and mention of the grant of the patent: **29.05.2024**
(21) Application number: 21160284.2
(22) Date of filing: 02.03.2021
(51) Int. Cl.: B65G 47/19, G01G 19/393

(54) **ARTICLE CONVEYANCE APPARATUS**
ARTIKELFÖRDERVORRICHTUNG
APPAREIL DE TRANSPORT D'ARTICLE

(30) Priority: 18.03.2020 JP 2020047871
(43) Date of publication of application: 22.09.2021
(73) Proprietor: Ishida Co., Ltd., Kyoto 606-8392 (JP)
(72) Inventor: HASHIGUCHI, Nobuki, Ritto-shi, Shiga 520-3026 (JP); ISHIBASHI, Tsuyoshi, Ritto-shi, Shiga 520-3026 (JP)
(74) Representative: Gill Jennings & Every LLP

(56) References cited:
- US-A1- 2002 161 467

## Description

### Technical Field

The present invention relates to an article conveyance apparatus.

### Background Art

Conventionally, known has been an article conveyance apparatus including: a hopper that receives an article conveyed from a conveyer and discharges the received article; a discharge chute that discharges the article discharged from the hopper, downstream; and a display unit that displays a hopper operation image for reception of an operation to the discharge operation of the hopper (e.g., refer to paragraph 0056 in Patent Literature 1). Thus, a worker performs an operation through the hopper operation image, so that the discharge operation of the hopper that discharges an article can be controlled (e.g., discharge timing).

Another example of an article conveyance apparatus is disclosed in Patent Literature 2. The article conveyance apparatus described in Patent Literature 2 has the features comprised in the preamble of independent claim 1.

### Citation List

### Patent Literature

Patent Literature 1: JP 2019-190856 A
Patent Literature 2: US 2002/161467 A1

### Summary of Invention

### Technical Problem

However, because a typical article conveyance apparatus has a small space between a hopper and a discharge chute, it is difficult to verify the state of an article that passes through the discharge chute, sufficiently. In addition, because the hopper moves in response to discharge of an article, a worker has difficulty in verifying the state of an article sufficiently, close to the article conveyance apparatus. Thus, in some cases, the worker has difficulty in controlling discharge operation properly in accordance with the state of an article that passes through the discharge chute.

In a case where the position of the hopper and the position of a display unit are apart from each other, coming close to the article conveyance apparatus in order to check the state of an article through the space causes lengthening of the time required for an actual operation to be performed after verification of the state of the article. Thus, the time required for control of discharge operation after verification of the state of the article is likely to lengthen.

Therefore, an object of the present invention is to provide an article conveyance apparatus including a display unit that displays a hopper operation image for reception of an operation to the discharge operation of a hopper, the article conveyance apparatus enabling easy shortening of the time required for a worker to control the discharge operation of the hopper and enabling proper control of the discharge operation.

### Solution to Problem

An article conveyance apparatus according to an aspect includes: a conveyer that conveys an article; a hopper that receives the article conveyed from the conveyer and discharges the article received, downstream; a discharge chute that discharges the article discharged from the hopper (4, 5, 6), downstream; a display unit that displays a hopper operation image (HOG) for reception of an operation to a discharge operation of the hopper (4, 5, 6). The article conveyance apparatus includes a discharge camera that captures a discharge image (EG) that indicates a state of the article that passes through the discharge chute and includes an outlet through which the article is discharged from the discharge chute. The display unit displays a discharge image captured by the discharge camera, together with the hopper operation image.

The display unit displays a discharge image captured by a discharge camera, together with the hopper operation image, so that the worker can verify the state of an article that passes through a discharge chute, at the time of verification of the hopper operation image, without directly going and viewing the state of the article that passes through the discharge chute. In addition, the worker can operate the discharge operation of the hopper without switching between the screen on which the hopper operation image is displayed and the screen on which the discharge image is displayed, so that the time required for control of the discharge operation of the hopper can be shortened easily. The worker can control the discharge operation of the hopper while verifying the state of an article that passes through the discharge chute, resulting in proper control of the discharge operation.

### Brief Description of Drawings

Fig. 1 is a side sectional view of the structure of an article conveyance apparatus according to an embodiment.
Fig. 2 is a top view of the structure of the article conveyance apparatus according to the embodiment.
Fig. 3 is a block diagram of a configuration regarding weighing control in the article conveyance apparatus according to the embodiment.
Fig. 4 illustrates an exemplary operation screen regarding the discharge operation of hoppers, on a touch panel, according to the present embodiment.
Fig. 5 illustrates an exemplary operation screen regarding conveyance operation, on the touch panel, according to the present embodiment.
Fig. 6 illustrates an exemplary operation screen regarding conveyance operation, on the touch panel, according to a modification.

### Description of Embodiments

An article conveyance apparatus according to an embodiment will be described with reference to the drawings. In the following drawings, the same or similar parts are denoted with the same or similar reference signs. The ratio between each dimension in the drawings is not necessarily in agreement with that in the description. The following embodiment is a specific example of the present invention, and thus the technical scope of the present invention is not limited to the embodiment.

### <Structure of Article Conveyance Apparatus>

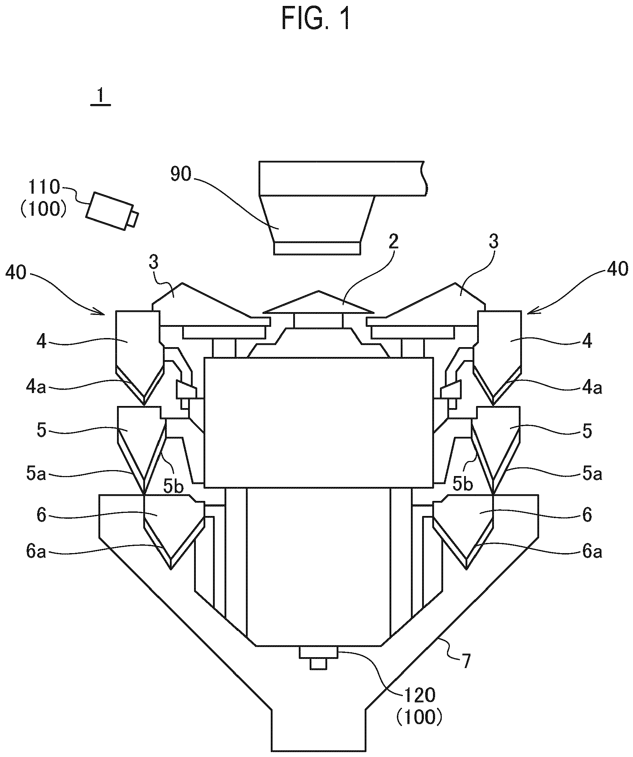

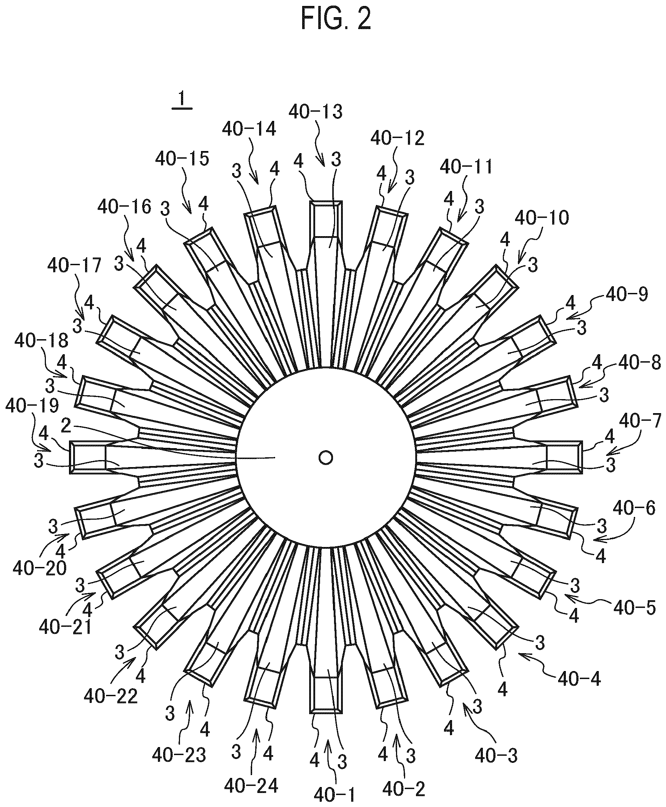

The structure of the article conveyance apparatus 1 according to the present embodiment will be described with Figs. 1 to 3. In the embodiment, the article conveyance apparatus 1 serves as a combination weighing apparatus. As illustrated in Figs. 1 and 2, the article conveyance apparatus 1 includes, for example, a distribution feeder 2, 24 heads 40, and a discharge chute 7. Note that an example in which the number of heads 40 is 24 will be given in the present embodiment, but the number of heads 40 is not limited to 24. The heads 40 are disposed annularly in top view. The numbers 1 to 24 are allocated to the 24 heads 40 counterclockwise in top view. As the heads 40, a first head 40-1 to a twenty-fourth head 40-24 are provided. The first head 40-1 to the twenty-fourth head 40-24 are disposed counterclockwise in numerical order. The meaning of "annularly" herein includes circularly and polygonally. In the present embodiment, the heads 40 disposed circularly will be given as an example. The heads 40 each include a radial feeder 3, a pool hopper 4, a weighing hopper 5, and a booster hopper 6. Therefore, in top view, the respective radial feeders 3, pool hoppers 4, weighing hoppers 5, and booster hoppers 6 of the heads 40 are disposed annularly. The pool hopper 4, weighing hopper 5, and booster hopper 6 in each head 40 function as a hopper that receives an article conveyed from a conveyer and discharges the received article, downstream.

The distribution feeder 2 is a smoothly conic member. A supply conveyer 90 provided above the distribution feeder 2 supplies articles to the distribution feeder 2. The distribution feeder 2 has an upper face that vibrates due to an electromagnet, not illustrated, provided at the lower portion of the distribution feeder 2. The distribution feeder 2 conveys the articles supplied to the upper face, radially in a circumferentially distributing manner, to supply each article to any of the radial feeders 3.

The radial feeders 3 are each a sheet-metal member made of a bent stainless-steel plate. The radial feeders 3 are disposed radially along the circumference of the distribution feeder 2. Each radial feeder 3 has a conveyance face that vibrates due to an electromagnet, not illustrated, provided at the lower portion of the radial feeder 3. The radial feeders 3 each convey the supplied articles, outward, due to vibration of the conveyance face. The radial feeders 3 each supply the articles to the pool hopper 4 of the head 40 to which the radial feeder 3 belongs. In this manner, each radial feeder 3 functions as a conveyer that conveys an article. The conveyance capacity of each radial feeder 3 can be adjusted on the basis of the vibration intensity (vibration amplitude) and vibration duration of the conveyance face. Therefore, adjustments in vibration intensity and vibration duration enable the weight of articles to be supplied to each pool hopper 4 to be kept in a predetermined range.

Each pool hopper 4 is disposed below the leading end of the corresponding radial feeder 3. The pool hoppers 4 each temporarily retain the articles supplied from the radial feeder 3 and discharge the articles. The pool hoppers 4 are each provided with a gate 4a that opens and shuts the bottom of the pool hopper 4 and a stepping motor (not illustrated) that drives the gate 4a. Each gate 4a operates to open and shut due to the stepping motor controlled by a control unit 30. The pool hoppers 4 each retain, with the gate 4a shut, the articles inside the pool hopper 4 and discharge, with the gate 4a open, the articles to the weighing hopper 5 of the head 40 to which the pool hopper 4 belongs.

Each weighing hopper 5 is disposed directly below the corresponding pool hopper 4. The weighing hoppers 5 each retain the articles supplied from the pool hopper 4 and measures the weight thereof. The weighing hoppers 5 are each provided with gates 5a and 5b that open and shut the bottom of the weighing hopper 5 and a stepping motor (not illustrated) that drives the gates 5a and 5b. The weighing hoppers 5 each retain the articles inside with the gates 5a and 5b both shut. The weighing hoppers 5 each discharge, with the gate 5a open, the articles to the discharge chute 7 and discharge, with the gate 5b open, the articles to the booster hopper 6 of the head 40 to which the weighing hopper 5 belongs.

Each booster hopper 6 is disposed below the corresponding weighing hopper 5 and is closer to the center of the article conveyance apparatus 1 than the corresponding weighing hopper 5 is. The booster hoppers 6 each temporarily retain the articles supplied from the weighing hopper 5 and discharge the articles. The booster hoppers 6 are each provided with a gate 6a that opens and shuts the bottom of the booster hopper 6 and a stepping motor (not illustrated) that drives the gate 6a. The booster hoppers 6 each retain, with the gate 6a shut, the articles inside and discharge, with the gate 6a open, the articles to the discharge chute 7.

The discharge chute 7 discharges, downstream, the articles discharged from each hopper (specifically, each weighing hopper 5 and each booster hopper 6). The discharge chute 7 gathers, in one place, the articles discharged from any weighing hopper 5 or booster hopper 6 selected by combination calculation, to be described later, and discharges the articles downward. Then, the articles discharged from the discharge chute 7 are supplied to, for example, a packaging apparatus at the post stage.

### <Configuration regarding Weighing Control in Article Conveyance Apparatus>

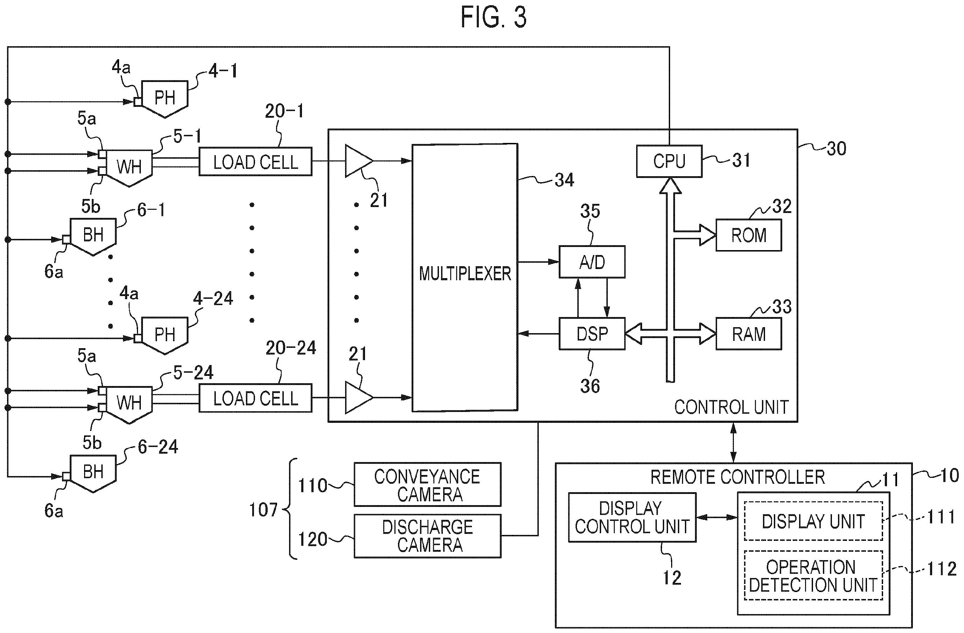

A configuration regarding weighing control in the article conveyance apparatus according to the present embodiment will be described with Figs. 1 to 3. Note that, in Fig. 3, the pool hoppers 4 belonging, respectively, to the first head 40-1 to the twenty-fourth head 40-24 are indicated as pool hoppers 4-1 to 4-24. Similarly, the weighing hoppers 5 are indicated as weighing hoppers 5-1 to 5-24, the booster hoppers 6 are indicated as booster hoppers 6-1 to 6-24, and load cells 20 are indicated as load cells 20-1 to 20-24.

As illustrated in Fig. 3, the article conveyance apparatus 1 includes a remote controller 10, a control unit 30, and a camera 100. Data communication between the remote controller 10 and the control unit 30 may be wired or wireless. Note that, as the remote controller 10, used may be a terminal device, such as a laptop PC, a tablet terminal, or a smartphone, on which a predetermined application program is installed.

The control unit 30 controls the heads 40. Specifically, the control unit 30 controls the conveyance operation of each radial feeder 3 (specifically, vibration of the conveyance face with the electromagnet) and additionally controls the operation regarding gate opening and shutting of each hopper (each pool hopper 4, each weighing hopper 5, and each booster hopper 6). Specifically, the control unit 30 performs gate opening and shutting operations to the gate 4a of each pool hopper 4, the gates 5a and 5b of each weighing hopper 5, and the gate 6a of each booster hopper 6 by controlling the corresponding stepping motors. Each weighing hopper 5 is provided with a load cell 20 and measures the weight of articles with the load cell 20. Each load cell 20 outputs the measured weight as a weight signal to the control unit 30.

The control unit 30 includes 24 amplifiers 21, a CPU 31, a ROM 32, a RAM 33, a multiplexer 34, an A/D converter 35, and a digital signal processor (DSP) 36. The CPU 31 mainly controls the weighing operation of the article conveyance apparatus 1. The amplifiers 21 are provided one to one to the load cells 20. The amplifiers 21 each amplify the weight signal from the load cell 20 and output the amplified weight signal to the multiplexer 34. In accordance with a command from the DSP 36, the multiplexer 34 selects one weight signal from the respective amplified weight signals received from the amplifiers 21 and outputs the one weight signal to the A/D converter 35. The A/D converter 35 converts the weight signal that is an analog signal into a digital signal and outputs the weight signal converted in the digital signal to the DSP 36. The DSP 36 mainly performs filtering to the weight signal converted in the digital signal and outputs the weight signal subjected to the filtering to the CPU 31. The CPU 31 stores the received weight signal into the RAM 33. Note that the CPU 31, the ROM 32, the RAM 33, and the DSP 36 are mutually connected through a bus, and the ROM 32 stores, for example, an operation program for causing the CPU 31 to operate.

The remote controller 10 includes a touch panel 11 and a display control unit 12. The touch panel 11 may include, for example, a liquid crystal display or an organic EL display. The touch panel 11 may include a display unit 111 that displays an image and an operation detection unit 112 that detects an operation performed by a worker for various types of setting regarding the article conveyance apparatus 1. An operator operates, for example, buttons displayed on the touch panel 11 (display unit 111), so that various types of input can be performed to the article conveyance apparatus 1. The display control unit 12 controls display of the touch panel 11 or outputs data input from the touch panel 11, to the CPU 31.

The camera 100 captures the state of articles. The camera 100 includes a conveyance camera 110 that captures the state of articles being conveyed by the conveyers and a discharge camera 120 that captures the state of articles that pass through the discharge chute. Therefore, the article conveyance apparatus 1 includes the plurality of cameras 100. A capture image captured by the camera 100 is sent to the control unit 30 and then is stored in the control unit 30.

### <Weighing Operation of Article Conveyance Apparatus>

The weighing operation of the article conveyance apparatus 1 according to the present embodiment will be described with Figs. 1 to 3.

Articles fall from the supply conveyer 90 and then are supplied onto the distribution feeder 2. At this time, because the distribution feeder 2 is vibrating on the basis of an instruction from the CPU 31, the articles receive vibration from the distribution feeder 2. Thus, each article moves outward on the distribution feeder 2 to reach any of the radial feeders 3.

In a case where a pool hopper 4-n (1 ≤ n ≤ 24) that is empty is present among the 24 pool hoppers 4-1 to 4-24, the CPU 31 vibrates the conveyance face of the radial feeder 3-n corresponding to the pool hopper 4-n. Due to the vibration, articles move outward on the radial feeder 3-n so as to be sent into the pool hopper 4-n that is empty. Similarly, the pool hoppers 4 other than the pool hopper 4-n are supplied with articles.

In a case where a weighing hopper 5-m (1 ≤ m ≤ 24) that is empty is present among the 24 weighing hoppers 5-1 to 5-24, the CPU 31 opens the gate 4a of the pool hopper 4-m located above the weighing hopper 5-m, so that the articles are sent to the weighing hopper 5-m. Simultaneously, the DSP 36 is notified that the weighing hopper 5-m has been supplied with the articles.

The weighing hopper 5-m retains the received articles and measures the weight of the retained articles with the load cell 20-m. Then, the weighing hopper 5-m outputs the measured weight as a weight signal to the corresponding amplifier 21. The weight signal amplified by the amplifier 21 is input to the multiplexer 34. Similarly, the weighing hoppers 5 other than the weighing hopper 5-m output the respective weight signals. Then, the weight signals after amplification are input to the multiplexer 34.

The DSP 36 instructs the multiplexer 34 to select the weight signal from the load cell 20-m. In accordance with the instruction, the multiplexer 34 selects the weight signal from the load cell 20-m among the input weight signals and outputs the weight signal to the A/D converter 35. In accordance with a timing signal sent from the DSP 36, the A/D converter 35 converts the weight signal that is an analog signal into a digital signal, and outputs the weight signal converted in the digital signal to the DSP 36. The DSP 36 performs filtering to the weight signal converted in the digital signal and outputs the weight signal subjected to the filtering to the CPU 31. The CPU 31 stores, as the weight of articles retained in the weighing hopper 5-m, the weight signal subjected to the filtering into the RAM 33.

When the booster hopper 6-m empties, the CPU 31 opens the gate 5b of the weighing hopper 5-m, so that the articles in the weighing hopper 5-m are supplied to the booster hopper 6-m. Simultaneously, the weight of articles in the weighing hopper 5-m (weight signal) stored in the RAM 33 is stored, as the weight of articles in the booster hopper 6-m, into the RAM 33, so that the weight of articles in the weighing hopper 5-m having been stored in the RAM 33 is reset. After that, when articles are supplied into the weighing hopper 5-m, the RAM 33 stores the weight thereof, similarly. In this manner, the weight of articles retained in each weighing hopper 5 and the weight of articles retained in each booster hopper 6 are stored in the RAM 33.

The CPU 31 performs combination calculation of each weight of articles stored in the RAM 33. Specifically, a combination of weights is acquired among the weights of articles in the weighing hoppers 5 and the weights of articles in the booster hoppers 6, stored in the RAM 33 such that the total weight is in a previously set allowable range. Then, among the weighing hoppers 5 and the booster hoppers 6, the CPU 31 selects hoppers each retaining articles having a weight included in the acquired combination, and opens the gates thereof. Note that, in a case where any weighing hopper 5 is selected, the gate 5a opens with the gate 5b shut. Thus, the discharge chute 7 is supplied with the articles in each hopper selected on the basis of the result of the combination calculation, so that the articles having a weight in the predetermined allowable range are sent to, for example, a packaging apparatus.

### <Operation Screen>

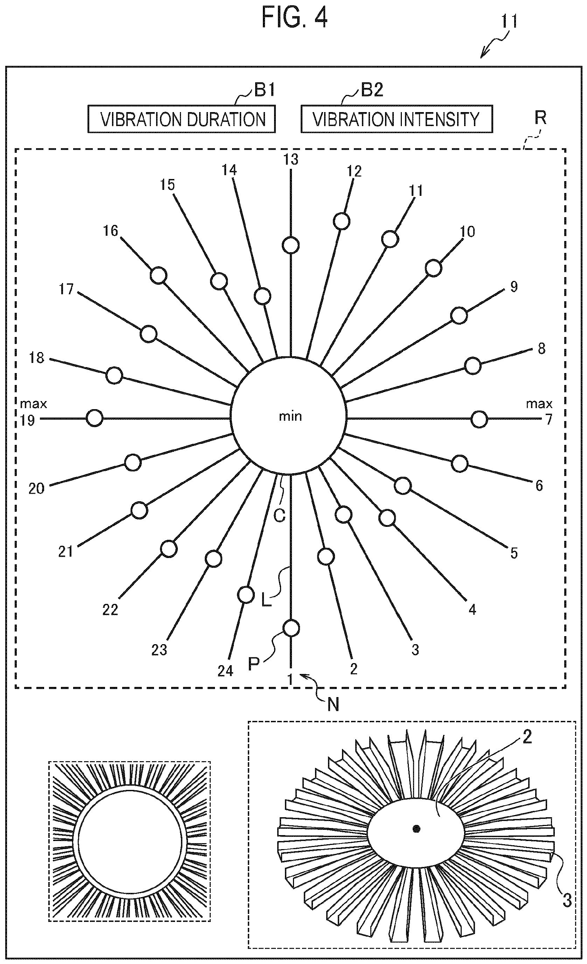

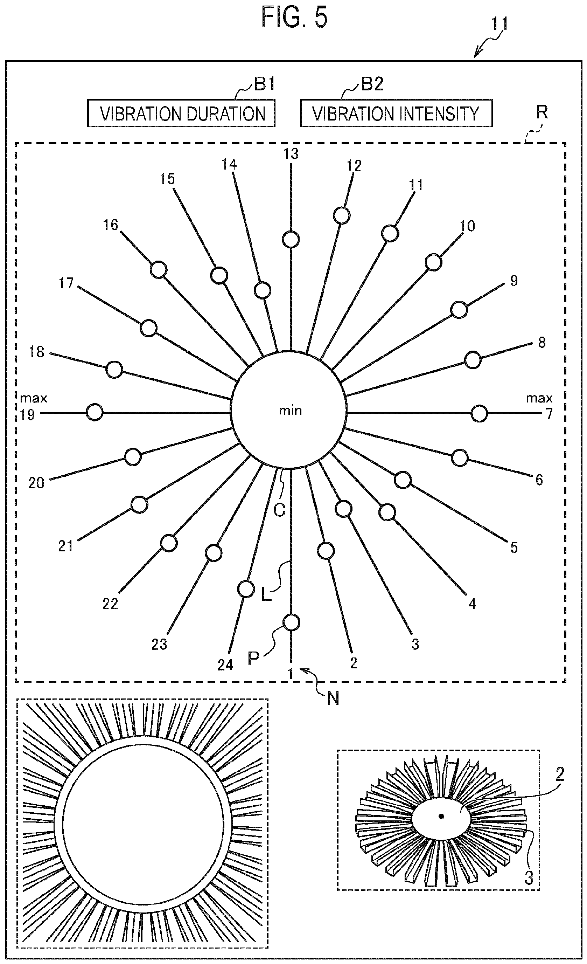

An operation screen according to the present embodiment will be described with Figs. 4 and 5. Fig. 4 illustrates an exemplary operation screen regarding the discharge operation of hoppers, on the touch panel 11, according to the present embodiment (hereinafter, referred to as a hopper operation screen). Fig. 5 illustrates an exemplary operation screen regarding conveyance operation, on the touch panel 11, according to the present embodiment (hereinafter, referred to as a conveyance operation screen). As illustrated in Fig. 4, the display unit 111 displays, on the hopper operation screen, a hopper operation image HOG for reception of an operation to the discharge operation of each hopper and a discharge image EG captured by the discharge camera 120. The display unit 111 may further display a conveyance image CG captured by the conveyance camera 110.

As illustrated in Fig. 4, the hopper operation image HOG includes a parameter-value adjustment region R. The parameter-value adjustment region R is a region for adjustment of the parameter regarding gate opening and shutting of each hopper. The parameter-value adjustment region R includes a circular region C displayed at the center thereof, a plurality of straight lines L extending outward from the circular region C, a plurality of adjustment points P displayed on the straight lines L, and a plurality of head numbers N displayed near the outer ends of the straight lines L. The circular region C has the character string "min" representing the minimum value, displayed therein. The number of straight lines L is identical to the number of heads 40, and the plurality of straight lines L is displayed radially. The straight lines L are identical in arrangement order to the heads 40.

The adjustment points P are each a point for adjustment of the parameter value corresponding to the corresponding head 40 (radial feeder 3). Each adjustment point P moves along the straight line L in accordance with a drag operation from the worker. Each adjustment point P is exemplified as circular in shape. However, each adjustment point P may be, for example, square, rectangular, or starry in shape. Note that a drag operation to an adjustment point P is an operation in which the worker moves the adjustment point P while keeping in touch with the adjustment point P. The position of the adjustment point P on each straight line L indicates the level of the currently set parameter value. Specifically, as the adjustment point P is closer inside (to the circular region C), the parameter value is smaller. As the adjustment point P is closer outside, the parameter value is larger.

When the touch panel 11 receives a drag operation to an adjustment point P, the display control unit 12 outputs data regarding the drag operation to the CPU 31. The data regarding the drag operation includes, for example, the drag start position, the drag direction, the drag amount, and the drag end position. On the basis of the data input from the display control unit 12, the CPU 31 determines which adjustment point P has been dragged and additionally determines the drag direction and drag amount of the adjustment point P. The CPU 31 selects, as a parameter adjustment target, the hopper corresponding to the dragged adjustment point P. Furthermore, the CPU 31 determines the adjustment method of the parameter value (increase or decrease) in accordance with the determined drag direction and additionally determines the adjustment amount of the parameter value (increase amount or decrease amount) in accordance with the determined drag amount. The CPU 31 adjusts the parameter value corresponding to the selected hopper, on the basis of the determinations, and changes the operation of the hopper, on the basis of the adjusted parameter value.

The parameter value regarding gate opening and shutting of the hopper corresponds to, for example, the parameter values regarding respective timings at which the shut gates of the pool hopper 4, the weighing hopper 5, and the booster hopper 6 open. The parameter value may correspond to the values regarding timing of gate opening and shutting of the weighing hopper 5 and timing of gate opening and shutting of the pool hopper 4. The parameter value may correspond to the values regarding timing of gate opening and shutting of the booster hopper 6 and timing of gate opening and shutting of the weighing hopper 5.

The discharge image EG indicates the state of articles that pass through the discharge chute 7, captured by the discharge camera 120 (hereinafter, referred to as a discharge state). As illustrated in Fig. 4, the discharge image EG indicates an outlet 72 through which articles are discharged from the discharge chute 7. The discharge image EG may indicate the inner-wall face of the discharge chute 7 on which articles slide down. The worker visually verifies the discharge image EG, so that the discharge state can be verified.

Because the display unit 111 displays the discharge image EG captured by the discharge camera 120 together with the hopper operation image HOG, the worker can verify the state of articles that pass through the discharge chute 7 at the time of verification of the hopper operation image HOG without directly going and viewing the state of articles that pass through the discharge chute 7. In addition, the worker can operate the discharge operation of each hopper without switching between the screen on which the hopper operation image HOG is displayed and the screen on which the discharge image EG is displayed, so that the time required for control of the discharge operation of each hopper can be shortened easily. The worker can control the discharge operation of each hopper while verifying the state of articles that pass through the discharge chute 7, resulting in proper control of the discharge operation.

The conveyance image CG indicates the state of articles being conveyed by the conveyers (radial feeders 3), captured by the conveyance camera 110 (hereinafter, referred to as a conveyance state). As illustrated in Fig. 4, the discharge image EG may indicate the outlet 72 through which articles are discharged from the discharge chute 7. The discharge image EG may indicate the inner-wall face of the discharge chute 7 on which articles slide down. The worker visually verifies the discharge image EG, so that the discharge state can be verified. The radial feeders 3 may be indicated. The worker visually verifies the conveyance image CG, so that the conveyance state can be verified.

In a case where an operation of displaying the hopper operation image HOG is performed, the display control unit 12 may acquire the capture image by the camera 100 from the control unit 30. Alternatively, the display control unit 12 may acquire the capture image in advance before the operation. On the basis of an instruction from the display control unit 12, the CPU 31 outputs the capture image to the display control unit 12.

As illustrated in Fig. 4, in a case where the discharge image EG and the conveyance image CG are displayed together with the hopper operation image HOG, the discharge image EG may be displayed more emphatically than the conveyance image CG. In the embodiment, the discharge image EG may be larger in size than the conveyance image CG. As another example of emphasis, the discharge image EG may be higher in resolution than the conveyance image CG. An outer frame surrounding the discharge image EG may be displayed and no outer frame surrounding the conveyance image CG may be displayed.

As illustrated in Fig. 5, the display unit 111 may display, on the conveyance operation screen, a conveyance operation image COG for reception of an operation to conveyance operation and a conveyance image CG. The display unit 111 may further display a discharge image EG. The conveyance operation image COG includes a parameter-value adjustment region R, similarly to the hopper operation image HOG. The conveyance operation image COG further includes a vibration-duration selection button B1 and a vibration-intensity selection button B2.

The parameter-value adjustment region R in the conveyance operation image COG is a region for adjustment of the parameter regarding conveyance operation of each conveyer (each radial feeder 3). Except that each conveyer is a target to be adjusted in parameter value, the parameter-value adjustment region R in the conveyance operation image COG is similar to the parameter-value adjustment region R in the hopper operation image HOG. Thus, the description thereof will be omitted. Note that the CPU 31 adjusts the parameter value corresponding to a radial feeder 3 selected as a parameter adjustment target, and changes the operation of the radial feeder 3, on the basis of the adjusted parameter value.

The vibration-duration selection button B1 is a button with which an operator selects the vibration duration of a radial feeder 3 as a parameter item to be adjusted. In response to a touch on the vibration-duration selection button B1, the display control unit 12 changes the display aspect of the vibration-duration selection button B1. For example, in order to indicate that the vibration-duration selection button B1 has been selected, the display control unit 12 changes the display color of the vibration-duration selection button B1 or displays a selection mark added to the vibration-duration selection button B1. On the basis of data input from the display control unit 12, the CPU 31 detects a touch on the vibration-duration selection button B1. Then, the CPU 31 acquires the currently set value of vibration duration of each radial feeder 3 and outputs the currently set value to the display control unit 12. The display control unit 12 indicates the set value of vibration duration of each radial feeder 3 input from the CPU 31, with the position of an adjustment point P. With the vibration-duration selection button B1 selected, the CPU 31 interprets a drag operation to an adjustment point P as an adjustment operation to the set value of vibration duration of the corresponding radial feeder 3 and adjusts the set value of vibration duration of the radial feeder 3 in accordance with the drag operation.

The vibration-intensity selection button B2 is a button with which an operator selects the vibration intensity of a radial feeder 3 as a parameter item to be adjusted. In response to a touch on the vibration-intensity selection button B2, the display control unit 12 changes the display aspect of the vibration-intensity selection button B2. For example, in order to indicate that the vibration-intensity selection button B2 has been selected, the display control unit 12 changes the display color of the vibration-intensity selection button B2 or displays a selection mark added to the vibration-intensity selection button B2. On the basis of data input from the display control unit 12, the CPU 31 detects a touch on the vibration-intensity selection button B2. Then, the CPU 31 acquires the currently set value of vibration intensity of each radial feeder 3 and outputs the currently set value to the display control unit 12. The display control unit 12 indicates the set value of vibration intensity of each radial feeder 3 input from the CPU 31, with the position of an adjustment point P. With the vibration-intensity selection button B2 selected, the CPU 31 interprets a drag operation to an adjustment point P as an adjustment operation to the set value of vibration intensity of the corresponding radial feeder 3 and adjusts the set value of vibration intensity of the radial feeder 3 in accordance with the drag operation.

As illustrated in Fig. 5, in a case where the discharge image EG and the conveyance image CG are displayed together with the conveyance operation image COG, the conveyance image CG may be displayed more emphatically than the discharge image EG. In the embodiment, the conveyance image CG may be larger in size than the discharge image EG.

As described above, in a case where the worker operates the discharge operation of a hopper through the hopper operation image HOG, the discharge image EG is displayed emphatically, so that the image to be verified at the time of an operation to the discharge operation of a hopper is grasped easily. Similarly, in a case where the worker operates conveyance operation through the conveyance operation image COG, the conveyance image CG is displayed emphatically, so that the image to be verified at the time of an operation to conveyance operation is grasped easily. Therefore, the worker easily grasps the image related to the displayed operation screen without hesitation, so that the time required for control of the discharge operation of a hopper or the time required for control of the conveyance operation of a conveyer can be shortened easily. Because the discharge image EG and the conveyance image CG are displayed, the worker easily grasps both of the state of articles that pass through the discharge chute 7 and the state of articles being conveyed by the conveyers. Thus, the worker easily notices a change in the state of articles, so that the worker can easily promptly start an operation to discharge operation or an operation to conveyance operation.

In a case where a screen different from the hopper operation screen is switched to the hopper operation screen, the display unit 111 may display the discharge image EG together with the hopper operation image HOG. For example, in a case where the conveyance operation screen is switched to the hopper operation screen, the display unit 111 may display the discharge image EG together with the hopper operation image HOG. Thus, in a case where made is a switch to the hopper operation screen, the worker can promptly verify, through the discharge image EG, the state of articles that pass through the discharge chute 7. When determining to need control of discharge operation, the worker can promptly perform an operation to the discharge operation of a hopper through the hopper operation image HOG, so that the time required for control of the discharge operation of a hopper can be shortened.

### <Modification>

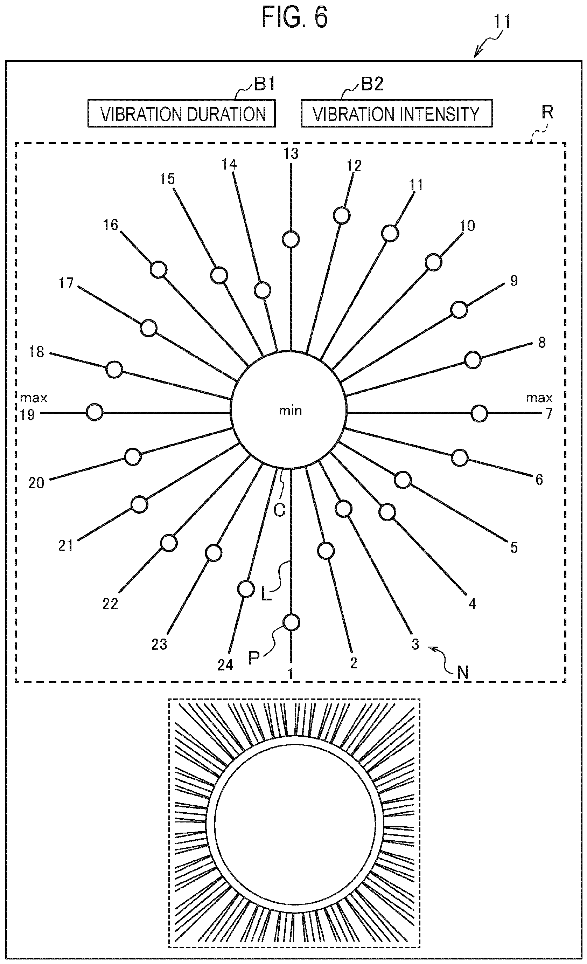

An operation screen according to a modification will be described with Fig. 6. As illustrated in Fig. 6, with the hopper operation image HOG displayed, the display unit 111 may display only the discharge image EG from the images captured by the plurality of cameras 100. Thus, the worker can promptly grasp the image to be verified at the time of an operation to the discharge operation of a hopper, so that the time required for control of the discharge operation of a hopper can be shortened easily.

In the embodiment described above, the article conveyance apparatus 1 has been exemplarily given as a combination weighing apparatus. However, this is not limitative. In the embodiment described above, the plurality of heads 40 disposed annularly has been exemplarily given. However, the plurality of heads 40 may be disposed linearly.

In the embodiment described above, the camera 100 sends the capture image to the control unit 30. However, this is not limitative. For example, the camera 100 may send the capture image to the display control unit 12.

In the embodiment described above, as hoppers that discharge articles to the discharge chute 7, in each head 40, the weighing hopper 5 and the booster hopper 6 have been given. However, this is not limitative. The article conveyance apparatus 1 may include no booster hopper 6. In this case, only the weighing hopper 5 may discharge articles to the discharge chute 7.

Note that provided may be a program that causes a terminal device to perform each piece of processing in the remote controller 10 described above. The program may be stored in a computer-readable medium. Use of the computer-readable medium enables installation of the program on a computer. The computer-readable medium storing the program herein may be a non-transitory recording medium. The non-transitory recording medium may be, but is not particularly limited to, a recording medium, such as a CD-ROM or a DVD-ROM.

### Reference Signs List

- 1: article conveyance apparatus
- 2: distribution feeder
- 3: radial feeder
- 4: pool hopper
- 5: weighing hopper
- 6: booster hopper
- 7: discharge chute
- 10: remote controller
- 11: touch panel
- 12: display control unit
- 20: load cell
- 30: control unit
- 40: head
- 90: supply conveyer
- 100: camera
- 110: conveyance camera
- 111: display unit
- 112: operation detection unit
- 120: discharge camera
- CG: conveyance image
- COG: conveyance operation image
- EG: discharge image
- HOG: hopper operation image

## Claims

1. An article conveyance apparatus (1) comprising:
a conveyer (3) that conveys an article;
a hopper (4, 5, 6) that receives the article conveyed from the conveyer (3) and discharges the article received, downstream;
a discharge chute (7) that discharges the article discharged from the hopper (4, 5, 6), downstream;
a display unit (111) that displays a hopper operation image (HOG) for reception of an operation to a discharge operation of the hopper (4, 5, 6); and
a discharge camera (120) that captures a discharge image (EG), wherein
the display unit (111) displays the discharge image (EG) captured by the discharge camera (120), together with the hopper operation image (HOG);
**characterized in that** that the discharge image (EG) indicates a state of the article that passes through the discharge chute (7) and includes an outlet through which the article is discharged from the discharge chute (7).

2. The article conveyance apparatus (1) according to claim 1, further comprising:
a conveyance camera (110) that captures a state of the article being conveyed by the conveyer (3), wherein
the display unit (111) displays a conveyance operation image (COG) for reception of an operation to a conveyance operation of the conveyer (3),
the display unit (111) displays a conveyance image (CG) captured by the conveyance camera (110), together with the conveyance operation image (COG), and
the display unit (111)
displays, when the discharge image (EG) and the conveyance image (CG) are displayed together with the hopper operation image (HOG), the discharge image (EG) more emphatically than the conveyance image (CG), and
displays, when the discharge image (EG) and the conveyance image (CG) are displayed together with the conveyance operation image (COG), the conveyance image (CG) more emphatically than the discharge image (EG).

3. The article conveyance apparatus (1) according to claim 1 or 2, wherein
the display unit (111) displays, when made is a switch to a screen on which the hopper operation image (HOG) is displayed, the discharge image (EG) together with the hopper operation image (HOG).

4. The article conveyance apparatus (1) according to claim 1, further comprising:
a plurality of cameras (100) that include the discharge camera (120) and capture a state of the article, wherein
the display unit (111) displays, with the hopper operation image (HOG) displayed, only the discharge image (EG) from images captured by the plurality of cameras (100).

## Patentansprüche

1. Artikelfördervorrichtung (1), die aufweist:
einen Förderer (3), der einen Artikel befördert;
einen Trichter (4, 5, 6), der den vom Förderer (3) geförderten Artikel aufnimmt und den aufgenommenen Artikel stromabwärts abgibt;
eine Ausgaberutsche (7), die den aus dem Trichter (4, 5, 6) abgegebenen Artikel stromabwärts abgibt;
eine Anzeigeeinheit (111), die ein Trichterbetriebsbild (HOG) zum Empfang einer Bedienung für einen Abgabebetrieb des Trichters (4, 5, 6) anzeigt; und
eine Abgabekamera (120), die ein Abgabebild (EG) aufnimmt, wobei die Anzeigeeinheit (111) das von der Abgabekamera (120) aufgenommene Abgabebild (EG) zusammen mit dem Trichterbetriebsbild (HOG) anzeigt;
**dadurch gekennzeichnet, dass** das Abgabebild (EG) einen Zustand des Artikels anzeigt, der die Ausgaberutsche (7) durchläuft, und einen Auslass aufweist, durch den der Artikel aus der Ausgaberutsche (7) abgegeben wird.

2. Artikelfördervorrichtung (1) nach Anspruch 1, die ferner aufweist:
eine Förderkamera (110), die einen Zustand des vom Förderer (3) beförderten Artikels erfasst, wobei
die Anzeigeeinheit (111) ein Förderbetriebsbild (COG) zum Empfang einer Bedienung für einen Förderbetrieb des Förderers (3) anzeigt,
die Anzeigeeinheit (111) ein Förderbild (CG), das von der Förderkamera (110) aufgenommen wird, zusammen mit dem Förderbetriebsbild (COG) anzeigt, und die Anzeigeeinheit (111)
wenn das Abgabebild (EG) und das Förderbild (CG) zusammen mit dem Trichterbetriebsbild (HOG) angezeigt werden, das Abgabebild (EG) nachdrücklicher als das Förderbild (CG) anzeigt, und
wenn das Abgabebild (EG) und das Förderbild (CG) zusammen mit dem Förderbetriebsbild (COG) angezeigt werden, das Förderbild (CG) nachdrücklicher als das Abgabebild (EG) anzeigt.

3. Artikelfördervorrichtung (1) nach Anspruch 1 oder 2, wobei
die Anzeigeeinheit (111) bei einem Wechsel zu einem Bildschirm, auf dem das Trichterbetriebsbild (HOG) angezeigt wird, das Abgabebild (EG) zusammen mit dem Trichterbetriebsbild (HOG) anzeigt.

4. Artikelfördervorrichtung (1) nach Anspruch 1, die ferner aufweist:
mehrere Kameras (100), die die Abgabekamera (120) umfassen und einen Zustand des Artikels aufnehmen, wobei
die Anzeigeeinheit (111), wenn das Trichterbetriebsbild (HOG) angezeigt wird, nur das Abgabebild (EG) aus den von den mehreren Kameras (100) aufgenommenen Bildern anzeigt.

## Revendications

1. Un appareil de transport d'articles (1) composé des éléments suivants :
un convoyeur (3) qui achemine un article
une trémie (4, 5, 6) qui reçoit l'article acheminé par le convoyeur (3) puis décharge, en aval, l'article reçu
une goulotte de décharge (7) qui déverse, en aval, l'article déchargé par la trémie (4, 5, 6)
un bloc d'affichage (111) qui affiche une image de fonctionnement de la trémie (HOG) allant de la réception d'une opération à une intervention de décharge de la trémie (4, 5, 6), et
une caméra de décharge (120) qui prend une image de décharge (EG), et
le bloc d'affichage (111) affiche l'image de décharge (EG) prise par la caméra de décharge (120), ainsi que l'image de fonctionnement de la trémie (HOG)
**se caractérisant par le fait que** l'image de décharge (EG) indique un état de l'article qui traverse la goulotte de décharge (7) et comporte une sortie qui permet à l'article de quitter la goulotte de décharge (7).

2. L'appareil de transport d'articles (1) que décrit la revendication 1, si ce n'est qu'il comporte, en outre :
une caméra de transport (110) qui saisit un état de l'article acheminé par le convoyeur (3), et
le bloc d'affichage (111) affiche une image de l'opération d'acheminement (COG) allant de la réception d'une opération à une intervention d'acheminement par le convoyeur (3),
le bloc d'affichage (111) affiche une image de transport (EG) prise par la caméra de transport (110), ainsi que l'image de l'opération d'acheminement (COG), et
le bloc d'affichage (111)
affiche, lorsque l'image de décharge (EG) et l'image de transport (CG) s'affichent ensemble avec l'image de fonctionnement de la trémie (HOG), l'image de décharge (EG) de manière plus emphatique que l'image de transport (CG), et
affiche, lorsque l'image de décharge (EG) et l'image de transport (CG) s'affichent ensemble avec l'image de l'opération d'acheminement (COG), l'image de transport (CG) de manière plus emphatique que l'image de décharge (EG).

3. L'appareil de transport d'articles (1) que décrit la revendication 1 ou 2, si ce n'est que :
le bloc d'affichage (111) affiche, lors du passage à un écran sur lequel s'affiche l'image de fonctionnement de la trémie (HOG), l'image de décharge (EG) ainsi que l'image de fonctionnement de la trémie (HOG).

4. L'appareil de transport d'articles (1) que décrit la revendication 1, si ce n'est qu'il comporte, en outre :
une pluralité de caméras (100), dont la caméra de décharge (120), qui saisissent un état de l'article, et si ce n'est que
le bloc d'affichage (111), lorsque l'image de fonctionnement de la trémie (HOG) est affichée, affiche uniquement l'image de décharge (EG) à partir des images saisies par la pluralité de caméras (100).
